Europäisches Patentamt

European Patent Office

Office européen des brevets

(11) Publication number: **0 267 688**

A1

# EUROPEAN PATENT APPLICATION

(21) Application number: 87309028.6

(22) Date of filing: 13.10.87

(51) Int. Cl.4: **G02F 1/133** , G01R 31/28

(30) Priority: 13.10.86 JP 243873/86
13.10.86 JP 243874/86
13.10.86 JP 243875/86

(43) Date of publication of application:
18.05.88 Bulletin 88/20

(84) Designated Contracting States:
DE FR GB

(71) Applicant: SEMICONDUCTOR ENERGY
LABORATORY CO., LTD.
398 Hase
Atsugi-shi Kanagawa-ken, 243(JP)

(72) Inventor: Yamazaki, Shunpei
7-21-21, Kitakarasuyama
Setagaya-Ku Tokyo 157(JP)
Inventor: Mase, Akira
Terrace Hase 3-3 381-1, Hase
Atsugi-shi Kanagawa 243(JP)
Inventor: Konuma, Toshimitsu
Flat Atsugi 206 931-1, Hase
Atsugi-shi Kanagawa 243(JP)
Inventor: Sakayori, Hiroyuki
Sanyu Bldg. 203 4-18-3, Haramachida
Machida-Shi Tokyo 194(JP)
Inventor: Kobayashi, Ippei
Flat Atsugi 202 931-1, Hase
Atsugi-Shi Kanagawa, 243(JP)
Inventor: Yamaguchi, Toshiharu
Flat Meiwa 201 2-4993-2, Soubudai
Zama-Shi Kanagawa, 228(JP)
Inventor: Osabe, Akio
Flat Atsugi 107 931-1, Hase
Atsugi-Shi Kanagawa, 243(JP)
Inventor: Watanabe, Toshio
Flat Atsugi 105 931-1, Hase
Atsugi-Shi Kanagawa, 243(JP)
Inventor: Sato, Masahiko
Flat Atsugi 103 931-1, Hase
Atsugi-Shi Kanagawa, 243(JP)
Inventor: Aoyagi, Osamu
Flat Atsugi 101 931-1, Hase
Atsugi-Shi Kanagawa, 243(JP)
Inventor: Ishigaki, Chizuru
Flat Ochiai 103 1144, Hase
Atsugi-Shi Kanagawa, 243(JP)
Inventor: Tabata, Kaoru
Flat Ochiai 103 1144, Hase
Atsugi-Shi Kanagawa, 243(JP)
Inventor: Hisato, Shinohara
5-15-8, Seishin
Sagamihara-Shi Kanagawa, 229(JP)

EP 0 267 688 A1

Inventor: **Shinji, Imato**
**Flat Atsugi 303 931-1, Hase**
**Atsugi-Shi Kanagawa, 243(JP)**

(74) Representative: **Milhench, Howard Leslie et al**
**R.G.C. Jenkins & Co. 26 Caxton Street**
**London SW1H 0RJ(GB)**

(54) **Improvements relating to liquid crystal devices.**

(57) An improved method of manufacturing liquid crystal devices is described. In this method, inspection for checking electrical connections is implemented in advance of the introduction of liquid crystal material between a pair of substrates. By use of this method, it becomes possible to repair the electrical connections when a defect is found, and therefore the production yield can be substantially improved.

## IMPROVEMENTS RELATING TO LIQUID CRYSTAL DEVICES

### BACKGROUND OF THE INVENTION

This invention concerns improvements relating to liquid crystal devices and in particular concerns manufacturing methods for making such devices and devices made by such methods.

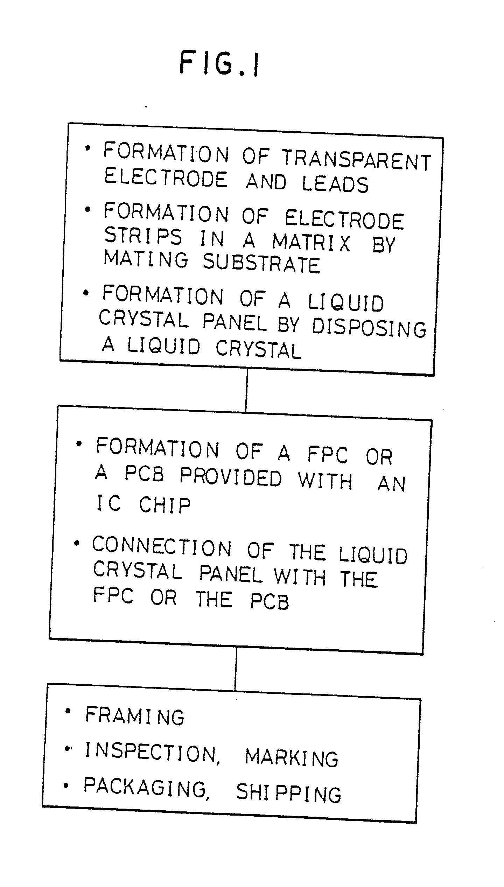

In the prior art, liquid crystal devices have been manufactured according to a method as schematically illustrated in Fig. 1 of the accompanying drawings. In accordance with this method, transparent patterns, i.e., transparent electrodes and lead lines, are formed on the insides of a pair of substrates. The pair of substrates are mated to produce a matrix electrode structure and liquid crystal material is introduced between the substrates to define a liquid crystal layer therebetween. Integrated circuits required to be associated with the liquid crystal devices are formed as flat-pad-packages or dual-in-line packages and are mounted on a flexible printed circuit (FPC) sheet or on a printed circuit board (PCB), and the lead lines of the liquid crystal device are interconnected with the printed circuit by means of solder or conductive rubber connectors. Thereafter, the liquid crystal devices are suitably packaged, checked and marked, and are then ready to be distributed to users.

The disadvantage of such a method is that the mounting of the IC chips and the interconnecting of each lead of the liquid crystal device with the printed circuit is necessarily effected as an intermediate stage in the manufacture of the liquid crystal device, and can be tested only after completion of the liquid crystal device itself. Because of this, the production yield is inevitably reduced by defective products.

### OBJECTS AND SUMMARY OF THE INVENTION

It is therefore an object of the present invention to provide a method of manufacturing liquid crystal devices which is capable of providing high production yield.

It is another object of the invention to provide a method of manufacturing liquid crystal devices with high reliability.

It is a further object of the invention to provide a method of manufacturing liquid crystal devices with low production cost.

According to the present invention in one of its aspects there is provided a method of manufacturing a liquid crystal device comprising:

preparing a pair of substrates;

forming an electrode arrangement on one surface of each of said substrates;

mating said pair of substrates with said electrode arrangements opposed to each other;

disposing a liquid crystal material between said mated substrates; and

enclosing said substrates with the liquid crystal therebetween;

said method being characterized in that the performance of said electrode arrangements are checked in advance of the introduction of said liquid crystal material between the mated substrates.

In another aspect, the present invention provides a method of manufacturing liquid crystal devices comprising:

forming electrode strips and lead pads on a pair of substrates;

mounting at least one IC chip on at least one of said substrates;

connecting the electrodes of said chip and said lead pads on said substrate;

checking the connections between said electrode strips and said IC chip; and

mating said pair of substrates and disposing a liquid crystal mating between said substrates after said checking step.

In yet another aspect, the present invention provides a method for manufacturing liquid crystal devices, each device comprising a pair of substrates, a liquid crystal layer in between said substrates, an electrode arrangement for said liquid crystal device, and an IC chip for driving said device, said method being characterized in that electrical connections are inspected before the liquid crystal material is introduced into the device.

Yet another aspect of the invention comprises a method of manufacturing a liquid crystal device comprising:

preparing a pair of substrates;

forming a conductive electrode pattern on said substrates for driving said liquid crystal device;

juxtaposing said substrates with said electrode patterns opposed; and

disposing a liquid crystal layer between said substrates;

said method being characterized in that at least one of said substrates is provided with a metallic peripheral circuit.

Another aspect of the invention comprises a method of manufacturing a liquid crystal device comprising:

preparing a pair of substrates;

forming an electrode arrangement for said liquid crystal on said substrates;

juxtaposing said substrates; and

disposing a liquid crystal layer between said substrates;

said method being characterized in that the electrode arrangement forming process comprises the following steps in sequence:

(1) forming a metallic peripheral circuit on at least one of said substrates;

(2) forming a transparent conductive film on said substrates; and

(3) patterning said transparent conductive film to produce an electrode pattern for driving said liquid crystal device.

A further aspect of the invention provides a method of manufacturing a liquid crystal device comprising:

preparing a pair of substrates;

forming an electrode arrangement for said liquid crystal device;

disposing a liquid crystal layer between said substrates;

said method being characterized in that the electrode arrangement forming process consists of the following steps in sequence:

(1) forming a transparent conductive film on said substrates;

(2) forming a metallic peripheral circuit on at least one of said substrates; and

(3) patterning said transparent conductive film to produce an electrode pattern for driving said liquid crystal device.

Yet a further aspect of the invention provides a method of manufacturing a liquid crystal device comprising:

preparing a pair of substrates;

forming an electrode arrangement for said liquid crystal device;

disposing a liquid crystal layer between said substrates;

said method being characterized in that the electrode arrangement forming process comprises the following steps in sequence:

(1) forming a transparent conductive film on said substrates;

(2) patterning said transparent conductive film to produce an electrode pattern for driving said liquid crystal device; and

(3) forming a metallic peripheral circuit on at least one of said substrates.

These and further aspects and features of the present invention are set forth with particularity in those possessed of the relevant skills from consideration of the following descriptions of exemplary embodiments given with reference to the accompanying drawings.

## BRIEF DESCRIPTION OF THE DRAWINGS

Fig.1 is an explanatory diagram of a prior art process for manufacturing liquid crystal devices;

Fig.2 is a partial view in cross section showing an example of a liquid crystal device manufactured in accordance with the present invention;

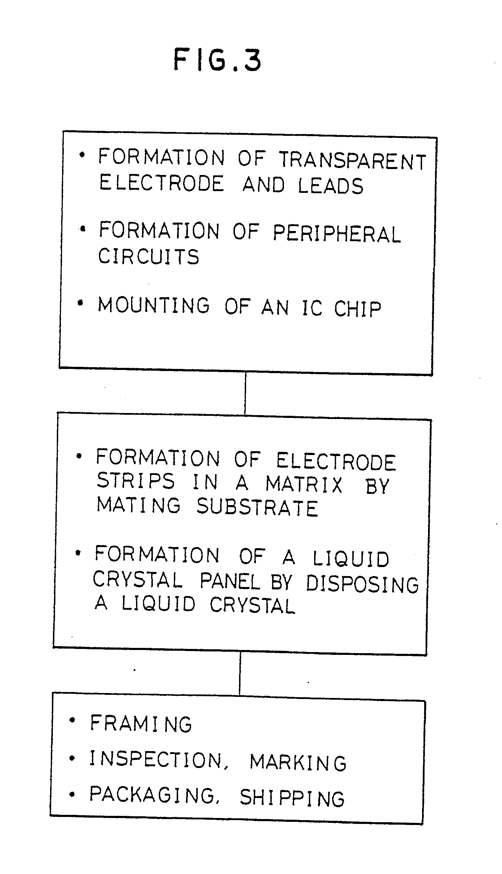

Fig.3 is an explanatory diagram - schematically showing a process for manufacturing liquid crystal devices in accordance with the present invention;

Fig.4 is a flow chart showing the manufacturing steps involved in a first embodiment of the process of the present invention;

Fig.5 is a flow chart showing manufacturing steps involved in a second embodiment of the process of the present invention;

Fig.6 is a flow chart showing manufacturing steps involved in a third embodiment of the process of the present invention;

Fig.7 is a flow chart showing manufacturing steps involved in a fourth embodiment of the process of the present invention;

Fig.8 is a flow chart showing manufacturing steps involved in a fifth embodiment of the process of the present invention; and

Fig.9 is a flow chart showing manufacturing steps involved in a sixth embodiment of the process of the present invention.

## DETAILED DESCRIPTION OF THE PREFERRED EMBODIMENTS

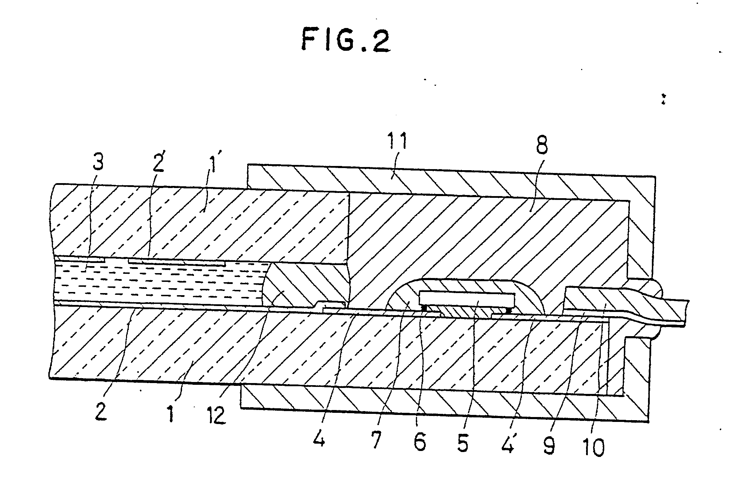

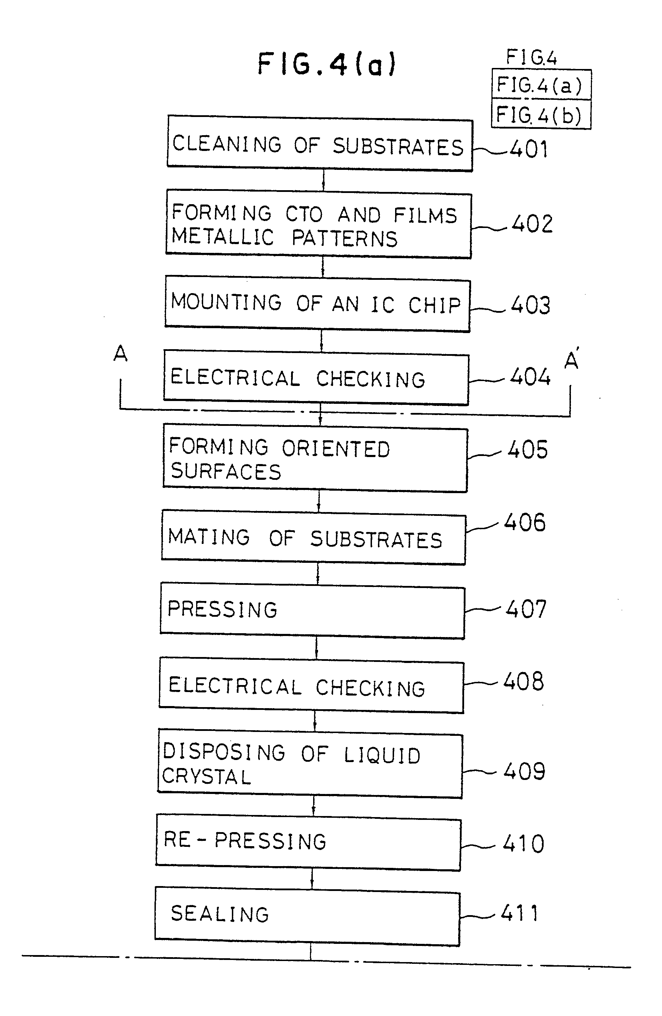

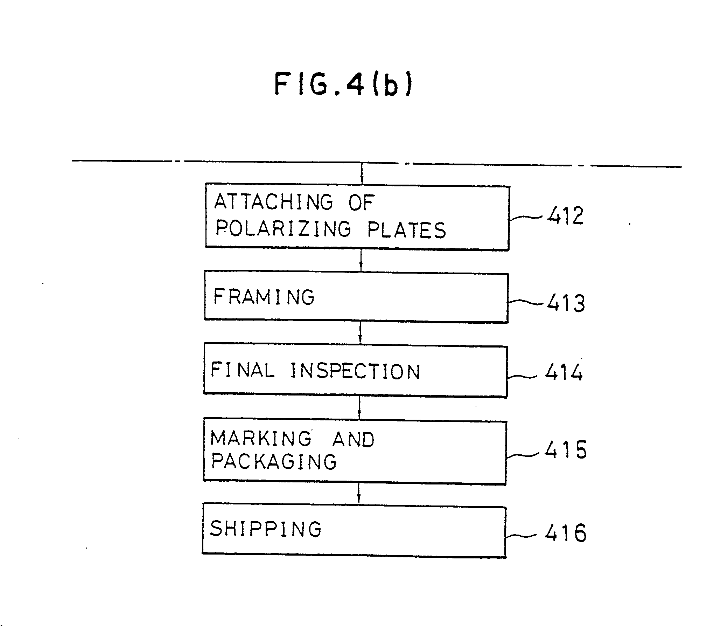

Referring to the flow chart of Fig.4 and the partial sectional view of a finished product shown in Fig.2, a process of manufacturing a liquid crystal device in accordance with the present invention will hereinafter be explained. On glass substrates 1 and 1' which are cleaned in advance (step 401), respective transparent electrodes 2 and 2' in the form of parallel lines, metallic lead lines 4 and 4' and other electrode patterns for coupling to peripheral circuits are formed (step 402). The thickness of the transparent electrodes is no more than 1μm. An IC chip 5 is mounted on the substrate 1 and is connected to terminal pads of the lead lines (step 403). The IC has bonding pads on the bottom surface thereof and is connected to the lead line pads by copper bumps, or gold and/or solder bumps, or with a conductive paste such as a paste load ed with silver or copper. Then, the formation of the electrode pattern and the electric connections of the electrodes with the IC chip 5 are checked (step 404). The steps 401 to 404 are called collectively a pretreatment procedure. Then, in order to prevent the connections of the IC chip with the lead line pads from disconnecting, the IC chip 5 is encapsulated with an epoxy resin 7 by potting molding. The epoxy resin remains soft even after it has cured so as not to produce local stress at the connected pads of the IC chip 5.

Next, very thin organic films are formed on the inside surfaces of the substrates 1 and 1' over the electrode patterns, and are rubbed to produce oriented films (step 405). The thus processed substrates 1 and 1' are then provided with epoxy resin layers 12 on their peripheries by screen printing and are mated with each other with their parallel electrode strips 2 and 2' forming a matrix structure in combination (step 406). The peripheries of the substrates 1 and 1' are pressed together at an elevated temperature (step 407) so that the epoxy resin is thermally cured and the substrates are fixed to each other with a spacing of from 1 to 10 microns, e.g. 2 microns, between the opposed surfaces of the electrodes 2 and 2'. After this step, the electrical circuit thus constructed is checked (step 408) because any necessary repair can be undertaken only before liquid crystal material is introduced. Then, keeping the mated substrates in vacuum, liquid crystal material is disposed between the substrates (step 409). The substrates are pressed again at an elevated temperature (step 410) to compensate for the bulging of the pair of substrates due to the liquid crystal disposed therebetween. After filling the space between the substrates with the liquid crystal material, the access opening which was provided at the periphery of the pair of substrates to enable the liquid crystal material to be introduced is sealed with an ultra-violet light curable organic resin (step 411). The condition of the liquid crystal material introduced into the device is then examined and, if it is satisfactory, a polarizing plate (not shown in Fig.2) is placed on one or both of the substrates after cleaning the surface of the substrate depending upon whether the device is a reflection or a transmission type device respectively (step 412).

The peripheral portion of the device, including the IC chip, is then sealed in order to protect the device from harmful environments, by use of a moulding material 8 provided within a metallic frame 11 (step 413). In Fig.2, the reference 10 designates a flexible connector of a flexible printed circuit which is connected with lead lines provided on the substrate 1. This connection may be implemented just before carrying out the moulding using the material 8, but preferably is effected before the liquid crystal material 3 is introduced into the device.

The device thus constructed is then ready for final inspection (step 414), marking and packaging (step 415) and distribution (step 416).

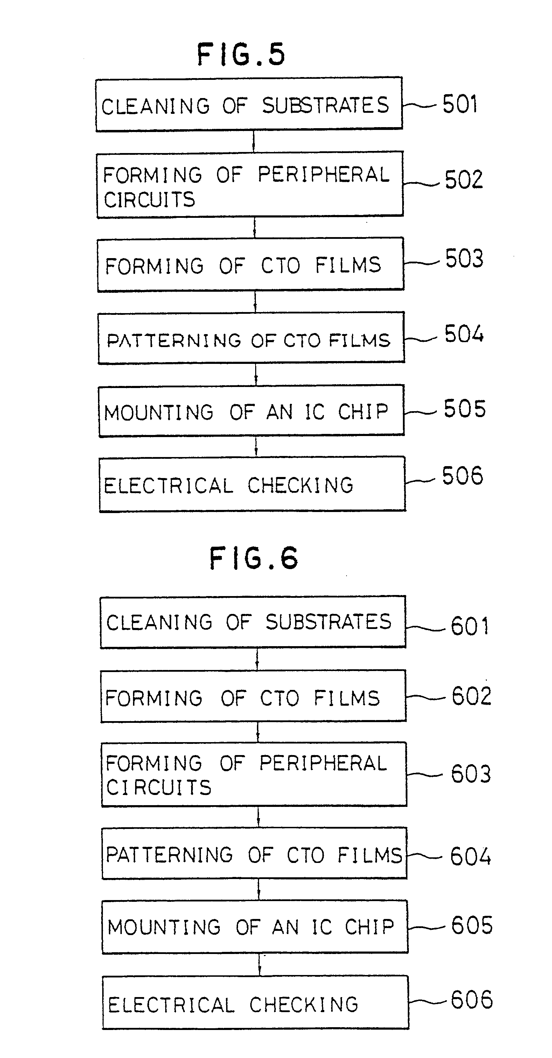

Referring to Fig.5, the process according to a second embodiment of the present invention is explained therein. This embodiment differs from the preceding embodiment in its pre-treatment procedure, and the steps which should be substituted for the steps 401-404 of Fig.4 are shown in Fig.5, the remaining steps being the same. After cleaning the pair of substrates (step 501), the peripheral circuits are formed by screen printing (step 502), and transparent electrodes made of indium tin oxide are formed by sputtering onto the portions of the substrates which in the finished device are to be located contiguous to liquid crystal material (step 503), and are then formed into column strips and row strips which collectively constitute a matrix structure (step 504). The formation of the transparent electrodes is preferably carried out in accordance with the method disclosed in Japanese Patent Application No. Sho.59-211769 filed on October 8th, 1984 and entitled "Machining by photo process" and Japanese Patent Appli cation No. Sho.61-186202 filed on August 8th, 1986 and entitled "Process for forming conductive film on a substrate". The process can be implemented without making use of photo resists, and therefore the procedure can be very much simplified. Then, the IC chip is mounted on one substrate by copper bumping and silver paste (steps 505) by coating lead line pads in the form of copper bumps with conductive silver paste, mounting the IC chip with its bottom pads coincident with the paste covered lead line pads, and pressing the IC chip against the pads at a temperature of 150-200°C so that eventually the pads of the IC chip and the lead line pads on the substrate become fixed together and electrically connected with each other.

Next, the device as thus far formed is electrically inspected. In doing so, probes are contacted with electrode pads formed on the substrate other than those on which the IC chip is mounted, while counterpart electrode pads on the other substrate are supplied with electric power and timing signals. Then, by means of this test configuration, the insulation resistances between adjacent transparent electrodes and lead lines are investigated, the function of the IC chip is investigated, DC testing is effected, the contact resistance between each pad of the IC chip and a counter pad on the substrate is investigated, and the sheet resistances of the transparent electrodes and of the lead lines are investigated.

If the result of these investigations suggests that the IC chip is defective, another chip is substituted for the defective chip. If the insulation resistance between the electrodes or the lead lines is not sufficient, any residue therebetween is removed, e.g. by etching. By virtue of these tests being carried out at an intermediate stage so that any defects can readily be remedied, production yields of finished liquid crystal devices can be expected to be higher than 90%.

Referring to Fig.6, a third embodiment of the present invention is explained therein. This embodiment differs from the first embodiment also only in the pre-treatment procedure and the steps which are substituted for the steps 401-404 of Fig.4 are shown in Fig.6. After cleaning the pair of substrates (step 601), transparent conductive films are formed on those surfaces of the substrates which are to be located contiguous to the liquid crystal (step 602), followed by forming the peripheral circuit by screen printing (step 603), patterning the transparent film by laser scribing with an excimer laser (step 604) and mounting of the IC chip on the substrate (step 605). The laser scribing is carried out as a linear scribing, that is to say the laser beam is shaped into a flat beam having a cross section in the form of·a line. The pulse width is not more than 20 nano secs.

In this embodiment, as a first procedure, transparent conductive patterns are formed on the bare substrates. Because of this, high quality conductive films and good proximate contact between the films and the substrates are achieved. The transparent conductive film is, however, exposed to a high temperature (400-500°C) during baking of the peripheral circuit after screen printing.

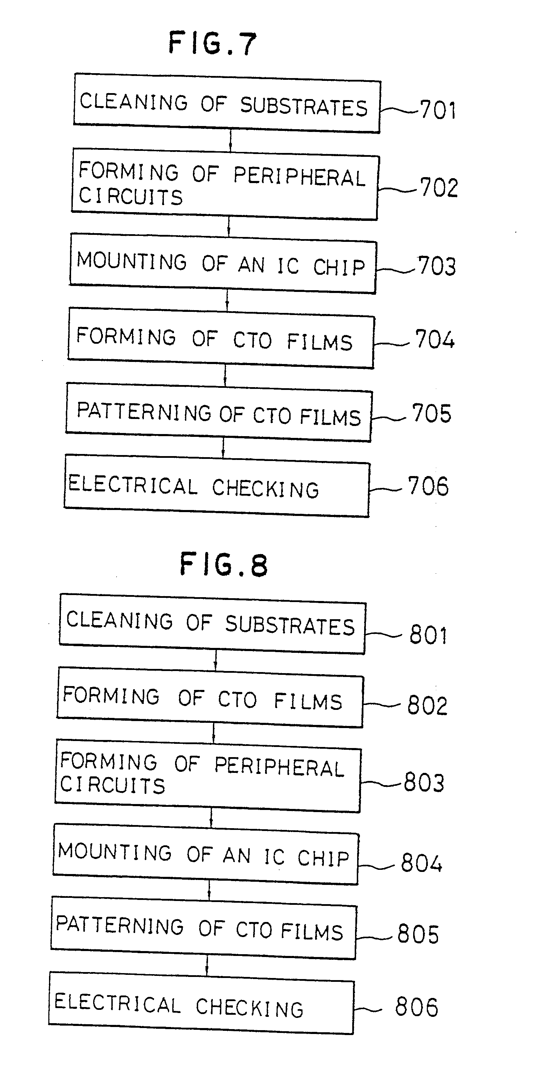

Referring to Fig.7, a fourth embodiment of the present invention is explained therein. This embodiment also differs from the first embodiment in the pre-treatment procedure, and the steps which are substituted for the steps 401-404 of Fig.4 are shown in Fig.7. After cleaning the pair of substrates (step 701), the peripheral circuit is formed by screen printing (step 702), followed by mounting of the IC chip (step 703), and the formation and patterning of transparent conductive films made of indium tin oxide on the portions of the substrates which are to be located contiguous to the liquid crystal material (step 704). When the transparent conductive film is formed by sputtering, vacuum evaporation is necessary for deposition because the film cannot be deposited in a plasma atmosphere. The other manufacturing conditions are the same as in the second embodiment.

Referring to Fig.8, a fifth embodiment of the present invention is explained. This embodiment also differs from the first embodiment in the pre-treatment procedure and the steps which are substituted for the steps 401-404 of Fig.4 are shown in Fig.8. After cleaning the pair of substrates (step 801), transparent conductive films are formed on the surfaces of the substrates which are to be located contiguous to the liquid crystal (step 802), followed by forming the peripheral circuit by screen printing (step 803), mounting the IC chip on the substrate (step 804), and patterning the transparent film (step 805). Although the production yield might be lower than in accordance with the foregoing embodiments, this embodiment is desirable when a measure is wanted to meet with electrostatic breakdown of an IC chip being mounted on the electrode pattern.

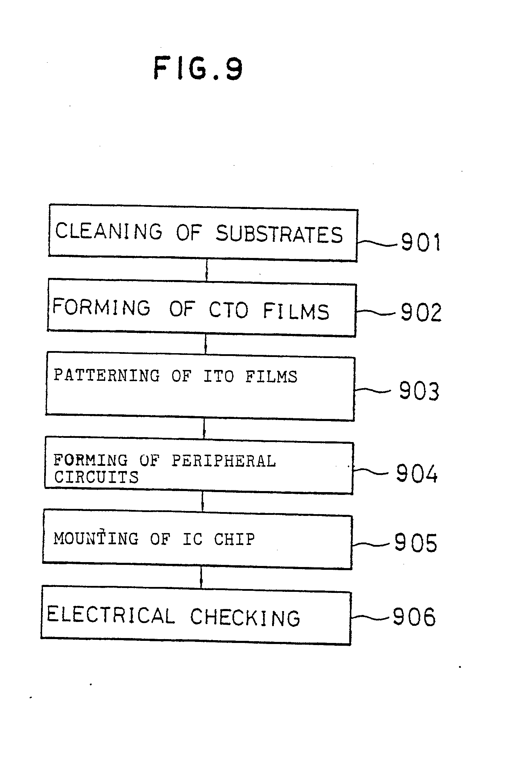

Referring to Fig.9, a sixth embodiment of the present invention is explained. This embodiment also differs from the first embodiment in the pretreatment procedure and the steps which are substituted for the steps 401-404 of Fig.4 are shown in Fig.9. After cleaning the pair of substrates (step 901), transparent conductive films made of indium tin oxide are formed and patterned onto those portions of the substrates which are to be located contiguous to the liquid crystal (steps 902 and 903). Then, the peripheral circuit is formed by screen printing (step 904), followed by mounting the IC chip (step 905), and electrical checking. When the transparent conductive film is formed by sputtering, vacuum evaporation is necessary for deposition because it cannot be deposited into a plasma atmosphere. The other manufacturing conditions are the same as in the second embodiment.

In the foregoing description, although the mounting of an IC chip is carried out in the pretreatment procedures, the mounting step can alternatively be implemented after the completion of the pre-treatment procedure in the foregoing embodiment.

The invention is not limited to the above particular embodiments and many modifications and variations will occur to those skilled in the art without departure from the spirit and scope of the invention as defined in the appended claims. Thus, for example, instead of forming the transparent pattern and peripheral circuit separately, they can be formed simultaneously by photolithography. In this case, the peripheral circuit can be a multilayered pattern formed simultaneously with a portion of the transparent pattern, so that the resistance of the circuit is re duced. The electrical measurements can be performed after mating the pair of substrates but before introducing the liquid crystal material. However, if an electrical defect appears in the inside pattern connection, it is not readily possible to effect a repair once the substrates have been assembled together. The present invention can furthermore be applied to liquid crystal devices with thin film transistors and non-linear elements on one of the pair of substrates (so-called active matrix type liquid crystal devices), liquid crystal shutters, and liquid crystal memories.

Claims

1. A method of manufacturing a liquid crystal device comprising:
   preparing a pair of substrates;
   forming an electrode arrangement on one surface of each of said substrates;
   mating said pair of substrates with said electrode arrangements opposed to each other;
   disposing a liquid crystal material between said mated substrates; and enclosing said substrates with the liquid crystal therebetween;
   said method being characterized in that the performance of said electrode arrangements are checked in advance of the introduction of said liquid crystal material between the mated substrates.

2. The method of claim 1 wherein at least one said electrode arrangement comprises a transparent conductive pattern and a metallic pattern defining a peripheral circuit.

3. The method of claim 2 wherein said transparent conductive pattern is formed by laser scribing a transparent conductive layer, and said metallic pattern is formed by screen printing.

4. The method of claim 2 or 3 further comprising mounting an IC chip on said metallic pattern.

5. The method of claim 4 wherein said mounting step is implemented before the mating step.

6. The method of claim 4 or 5 wherein said checking step is implemented also for checking the connection and the function of said IC chip.

7. A method of manufacturing liquid crystal devices comprising:
   forming electrode strips and lead pads on a pair of substrates;
   mounting at least one IC chip on at least one of said substrates;
   connecting the electrodes of said chip and said lead pads on said substrate;
   checking the connections between said electrode strips and said IC chip; and
   mating said pair of substrates and disposing a liquid crystal material between said substrates after said checking step.

8. The method of claim 7 further comprising a step of connecting wires and said lead lines.

9. The method of claim 8 wherein said checking step is implemented using said wires connected with said lead lines.

10. A method for manufacturing liquid crystal devices, each device comprising a pair of substrates, a liquid crystal layer in between said substrates, an electrode arrangement for said liquid crystal device, and an IC chip for driving said device, said method being characterized in that electrical connections are inspected before the liquid crystal material is introduced into the device.

11. The method of claim 10 wherein the functioning of said IC chip is inspected during the inspection of said electrical connections.

12. The method of claim 11 further comprising a step of encapsulating said IC chip mounted on said substrate after the inspection.

13. A method of manufacturing a liquid crystal device comprising:
   preparing a pair of substrates;
   forming a conductive electrode pattern on said substrates for driving said liquid crystal device;
   juxtaposing said substrates with said electrode patterns opposed; and
   disposing a liquid crystal layer between said substrates;
   said method being characterized in that at least one of said substrates is provided with a metallic peripheral circuit.

14. The method of claim 13 wherein said metallic peripheral circuit is formed by screen printing.

15. The method of claim 14 wherein said conductive pattern is formed by laser scribing of a conductive layer.

16. The method of claim 15 wherein said laser scribing is implemented with a flat laser beam having a linear cross section.

17. A method of manufacturing a liquid crystal device comprising:
   preparing a pair of substrates;
   forming an electrode arrangement for said liquid crystal on said substrates;
   juxtaposing said substrates; and disposing a liquid crystal layer between said substrates;
   said method being characterized in that the electrode arrangement forming process comprises the following steps in sequence:
   (1) forming a metallic peripheral circuit on at least one of said substrates;
   (2) forming a transparent conductive film on said substrates; and
   (3) patterning said transparent conductive film to produce an electrode pattern for driving said liquid crystal device.

18. A method of manufacturing a liquid crystal device comprising:
   preparing a pair of substrates;
   forming an electrode arrangement for said liquid crystal device;
   disposing a liquid crystal layer between said substrates;
   said method being characterized in that the electrode arrangement forming process comprises the following steps in sequence:
   (1) forming a transparent conductive film on said substrates;
   (2) forming a metallic peripheral circuit on at least one of said substrates; and

(3) patterning said transparent conductive film to produce an electrode pattern for driving said liquid crystal device.

19. A method of manufacturing a liquid crystal device comprising:

preparing a pair of substrates;

forming an electrode arrangement for said liquid crystal device;

disposing a liquid crystal layer between said substrates;

said method being characterized in that the electrode arrangement forming process comprises the following steps in sequence:

(1) forming a transparent conductive film on said substrates;

(2) patterning said transparent conductive film to produce an electrode pattern for driving said liquid crystal device; and

(3) forming a metallic peripheral circuit on at least one of said substrates.

# FIG.1

- FORMATION OF TRANSPARENT ELECTRODE AND LEADS
- FORMATION OF ELECTRODE STRIPS IN A MATRIX BY MATING SUBSTRATE
- FORMATION OF A LIQUID CRYSTAL PANEL BY DISPOSING A LIQUID CRYSTAL

- FORMATION OF A FPC OR A PCB PROVIDED WITH AN IC CHIP
- CONNECTION OF THE LIQUID CRYSTAL PANEL WITH THE FPC OR THE PCB

- FRAMING
- INSPECTION, MARKING
- PACKAGING, SHIPPING

# FIG.2

# FIG.3

- FORMATION OF TRANSPARENT ELECTRODE AND LEADS
- FORMATION OF PERIPHERAL CIRCUITS
- MOUNTING OF AN IC CHIP

- FORMATION OF ELECTRODE STRIPS IN A MATRIX BY MATING SUBSTRATE
- FORMATION OF A LIQUID CRYSTAL PANEL BY DISPOSING A LIQUID CRYSTAL

- FRAMING
- INSPECTION, MARKING
- PACKAGING, SHIPPING

# FIG.4(a)

FIG.4

| FIG.4(a) |
| FIG.4(b) |

CLEANING OF SUBSTRATES — 401

FORMING CTO AND FILMS METALLIC PATTERNS — 402

MOUNTING OF AN IC CHIP — 403

A ─── ELECTRICAL CHECKING — 404 ─── A'

FORMING ORIENTED SURFACES — 405

MATING OF SUBSTRATES — 406

PRESSING — 407

ELECTRICAL CHECKING — 408

DISPOSING OF LIQUID CRYSTAL — 409

RE-PRESSING — 410

SEALING — 411

# FIG.4(b)

```
┌──────────────────────────┐
│ ATTACHING OF             │ ～ 412
│ POLARIZING PLATES        │
└──────────────────────────┘
            │
            ▼
┌──────────────────────────┐
│ FRAMING                  │ ～ 413
└──────────────────────────┘
            │
            ▼
┌──────────────────────────┐
│ FINAL INSPECTION         │ ～ 414
└──────────────────────────┘
            │
            ▼
┌──────────────────────────┐
│ MARKING AND              │ ～ 415
│ PACKAGING                │
└──────────────────────────┘
            │
            ▼
┌──────────────────────────┐
│ SHIPPING                 │ ～ 416
└──────────────────────────┘
```

# FIG.5

| | |
|---|---|
| CLEANING OF SUBSTRATES | 501 |
| FORMING OF PERIPHERAL CIRCUITS | 502 |
| FORMING OF CTO FILMS | 503 |
| PATTERNING OF CTO FILMS | 504 |
| MOUNTING OF AN IC CHIP | 505 |
| ELECTRICAL CHECKING | 506 |

# FIG.6

| | |
|---|---|
| CLEANING OF SUBSTRATES | 601 |
| FORMING OF CTO FILMS | 602 |
| FORMING OF PERIPHERAL CIRCUITS | 603 |
| PATTERNING OF CTO FILMS | 604 |
| MOUNTING OF AN IC CHIP | 605 |
| ELECTRICAL CHECKING | 606 |

# FIG.7

CLEANING OF SUBSTRATES —701

FORMING OF PERIPHERAL CIRCUITS —702

MOUNTING OF AN IC CHIP —703

FORMING OF CTO FILMS —704

PATTERNING OF CTO FILMS —705

ELECTRICAL CHECKING —706

# FIG.8

CLEANING OF SUBSTRATES —801

FORMING OF CTO FILMS —802

FORMING OF PERIPHERAL CIRCUITS —803

MOUNTING OF AN IC CHIP —804

PATTERNING OF CTO FILMS —805

ELECTRICAL CHECKING —806

# FIG.9

CLEANING OF SUBSTRATES — 901

FORMING OF CTO FILMS — 902

PATTERNING OF ITO FILMS — 903

FORMING OF PERIPHERAL CIRCUITS — 904

MOUNTING OF IC CHIP — 905

ELECTRICAL CHECKING — 906

## DOCUMENTS CONSIDERED TO BE RELEVANT

EP 87309028.6

| Category | Citation of document with indication, where appropriate, of relevant passages | Relevant to claim | CLASSIFICATION OF THE APPLICATION (Int. Cl 4) |
|---|---|---|---|
| Y | EP - A1 - 0 143 039 (COMMISARIAT) | 1,2,4, 6-12 | G 02 F 1/133 |
| X | * Page 3, line 6 - page 9, line 10; page 10, line 23 - page 19, line 7; fig. 2-6 * | 13 | G 01 R 31/28 |
| A | | 17-19 | |
| | -- | | |
| Y,P | US - A - 4 643 526 (WATANABE et al.) | 1,2,4, 6-12 | |
| | * Claims; fig. 1,2 * | | |
| X | | 13,14 | |
| Y | & GB-A-2 160 693 (24.12.85) | 15 | |
| A | | 5,17-19 | |
| | -- | | |
| Y | US - A - 4 081 653 (KOO et al.) | 15 | |
| A | * Column 2, line 57 - column 4, line 48 * | 3,16 | |
| | -- | | TECHNICAL FIELDS SEARCHED (Int. Cl.4) |
| Y | EP - A1 - 0 025 250 (N.V. PHILIPS') | 1,2,4, 6-12 | G 02 F |
| | * Fig. 1-3 * | | G 01 R |
| X | | 19 | |
| A | | 17,18 | |
| | -- | | |
| A | US - A - 4 501 471 (CULLEY et al.) | 1,7,10, 13,17-19 | |
| | * Abstract; fig. 3,4,5 * | | |
| | ---- | | |

The present search report has been drawn up for all claims

| Place of search | Date of completion of the search | Examiner |
|---|---|---|
| VIENNA | 26-01-1988 | GRONAU |